(19) Europäisches Patentamt
European Patent Office
Office européen des brevets

(11) **EP 3 661 322 B1**

(12) **EUROPÄISCHE PATENTSCHRIFT**

(45) Veröffentlichungstag und Bekanntmachung des Hinweises auf die Patenterteilung:
**14.12.2022 Patentblatt 2022/50**

(21) Anmeldenummer: **19020715.9**

(22) Anmeldetag: **18.06.2015**

(51) Internationale Patentklassifikation (IPC):
**H05B 3/44** (2006.01) **F24H 1/10** (2022.01)
**H05B 3/62** (2006.01) **B01J 19/24** (2006.01)
**C10G 9/24** (2006.01) **F16L 53/37** (2018.01)
**H05B 3/00** (2006.01)

(52) Gemeinsame Patentklassifikation (CPC):
**F16L 53/37; C10G 9/24; F24H 1/105; H05B 3/0004;**
H05B 2203/021; H05B 2203/022

(54) **VERFAHREN ZUM HEIZEN EINES FLUIDES IN EINER ROHRLEITUNG MIT DREHSTROM**

METHOD FOR HEATING A FLUID IN A PIPE WITH ALTERNATING CURRENT

PROCÉDÉ DE CHAUFFAGE D'UN FLUIDE DANS UNE CONDUITE À COURANT TRIPHASÉ

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **26.06.2014 EP 14002193**

(43) Veröffentlichungstag der Anmeldung:
**03.06.2020 Patentblatt 2020/23**

(62) Dokumentnummer(n) der früheren Anmeldung(en) nach Art. 76 EPÜ:
**15730964.2 / 3 162 165**

(73) Patentinhaber: **Linde GmbH**
**82049 Pullach (DE)**

(72) Erfinder: **EDER, Kurt**
**81735 München (DE)**

(74) Vertreter: **Meilinger, Claudia Sabine et al
Linde GmbH
Intellectual Property EMEA
Dr.-Carl-von-Linde-Straße 6-14
82049 Pullach (DE)**

(56) Entgegenhaltungen:
**EP-A2- 2 537 579       DE-A1- 2 362 628
DE-A1- 3 334 334       DE-B- 1 234 882
DE-C- 710 187**

**Beschreibung**

Die Erfindung betrifft ein Verfahren zum Heizen eines Fluides in einer Einrichtung, die zumindest eine Rohrleitung aufweist, die elektrisch beheizt wird.

Eine derartige Einrichtung kann zumindest eine elektrisch leitfähige Rohrleitung zur Aufnahme des Fluides aufweisen, sowie zumindest eine mit der Rohrleitung verbundene elektrische Energiequelle, z.B. eine Spannungsquelle oder Stromquelle, die dazu ausgebildet ist, einen Strom in der mindestens einen Rohrleitung zu erzeugen, der die Rohrleitung zum Heizen des Fluides heizt, indem aufgrund des elektrischen Widerstandes der mindestens einen Rohrleitung Joulesche Wärme in der Rohrleitung erzeugt wird. Eine derartige Einrichtung ist z.B. aus der DE2362628C3 bekannt. Die erzeugte Joulesche Wärme ist im Allgemeinen proportional zu der dort umgesetzten elektrischen Leistung und der Zeitdauer, über die der Strom fließt.

DE 710 187 C (SIEMENS AG) 6. September 1941 (1941-09-06) beschreibt einen elektrisch beheizten Hochdruckdampferzeuger, oder -dampfüberhitzer.

Hiervon ausgehend liegt der vorliegenden Erfindung die Aufgabe zugrunde, ein verbessertes Verfahren zum Heizen eines Fluides bereitzustellen.

Diese Aufgabe wird durch ein Verfahren mit den Merkmalen des Anspruchs 1 gelöst. Vorteilhafte Ausgestaltungen der Erfindung sind u. a. in den zugehörigen Unteransprüchen angegeben.

Gemäß Anspruch 1 wird demnach bereitgestellt:

Ein Verfahren zum Heizen eines Fluides unter Verwendung einer Einrichtung zum Heizen eines Fluides, mit:

- zumindest einer elektrisch leitfähigen Rohrleitung zur Aufnahme des Fluides, und
- zumindest einer mit der mindestens einen Rohrleitung verbundenen Spannungsquelle, wobei die mindestens eine Spannungsquelle dazu ausgebildet ist, einen elektrischen Strom in der mindestens einen Rohrleitung zu erzeugen, der die mindestens einen Rohrleitung zum Heizen des Fluides erwärmt,
- wobei die mindestens eine Spannungsquelle zumindest M Außenleiter aufweist, wobei M eine natürliche Zahl größer oder gleich zwei ist, und wobei die mindestens eine Spannungsquelle dazu ausgebildet ist, an den Außenleitern eine Wechselspannung bereitzustellen, wobei jene Wechselspannungen gegeneinander um $2\pi/M$ phasenverschoben sind, und wobei die Außenleiter so mit der mindestens einen Rohrleitung elektrisch leitend verbunden sind, dass eine Sternschaltung gebildet wird, bei der jeder Außenleiter über zumindest einen Teil der mindestens einen Rohrleitung elektrisch leitend mit dem Sternpunkt der Sternschaltung verbunden ist,
- wobei das Fluid die mindestens eine oder mehrere Rohrleitungen der Einrichtung durchströmt und in diesen erhitzt wird, indem die mindestens eine Rohrleitung bzw. die mehreren Rohrleitungen durch einen in der mindestens einen Rohrleitung oder in den mehreren Rohrleitungen fließenden Mehrphasenwechselstrom, erhitzt werden, so dass in der der mindestens einen Rohrleitung oder in den mehreren Rohrleitungen Joulesche Wärme erzeugt wird, die auf das Fluid übertragen wird, so dass dieses beim Durchströmen der mindestens einen Rohrleitung oder der mehreren Rohrleitungen erhitzt wird, wobei

-- als Fluid ein vorgewärmtes Kohlenwasserstoff-Dampfgemisch geheizt wird, um die Kohlenwasserstoffe aufzuspalten, oder
-- die mindestens eine Rohrleitung als Reaktionsrohr eines Reformes ausgebildet ist.

Es können eine Mehrzahl an Rohrleitungen sowie insbesondere eine Mehrzahl an Spannungsquellen vorgesehen sein, wobei vorzugsweise jeder Rohrleitung je eine Spannungsquelle zugeordnet ist.

Es ist möglich, mehrere Sternschaltungen mit separaten Sternpunkten zu bilden. So kann z.B. für jede Rohrleitung eine separate Sternschaltung gebildet werden.

Gemäß einer bevorzugten Ausführungsform der Erfindung ist vorgesehen, dass die Spannungsquelle oder die Spannungsquellen jeweils einen Neutralleiter aufweist bzw. aufweisen, wobei die mindestens eine Spannungsquelle bzw. die jeweilige Spannungsquelle dazu ausgebildet ist, zwischen den Außenleitern und dem Neutralleiter jeweils eine Wechselspannung bereitzustellen, wobei jene Wechselspannungen gegeneinander um $2\pi/M$ phasenverschoben sind. Bevorzugt ist der Neutralleiter bzw. jeweilige Neutralleiter elektrisch leitend mit dem Sternpunkt verbunden.

Unter einer Sternschaltung wird vorliegend eine Zusammenschaltung von beliebig vielen Anschlüssen (M Anschlüsse, wobei ein ggf. vorhandener Neutralleiter auch mit dem Sternpunkt verbunden sein kann) über je einen Widerstand an einen gemeinsamen Punkt verstanden, der als Sternpunkt bezeichnet wird.

Der Sternpunkt führt mit Vorteil bei gleichmäßiger Belastung der M (z.B. M=3) Außenleiter keinen Strom (bei ungleichmäßiger Belastung lediglich die Differenz der Ströme bzw. bei hochohmiger Anbindung des Neutralleiters mit dem Sternpunkt der mindestens einen Rohrleitung eine Differenzspannung).

Bevorzugt ist daher die mindestens eine Rohrleitung oder die Mehrzahl an Rohrleitungen so konfiguriert, dass sich die Ströme im Sternpunkt aufheben. Mit anderen Worten weisen also bevorzugt die hergestellten, elektrisch leitendenden Verbindungen (die jeweils einen Teil der mindestens einen Rohrleitung umfassen) zwischen dem jeweiligen Außenleiter der mindestens einen Spannungsquelle und dem Sternpunkt den gleichen ohmschen Widerstand auf, so dass sich im Sternpunkt die einzelnen Ströme aufheben.

Hinsichtlich der Betriebserdung ist in der Regel bei vorhandenem Neutralleiter (z.B. TN-Netz) vorgesehen, den Sternpunkt der Spannungsquelle bzw. den N-Anschluss zu erden. Die Erdung kann dabei z.B. starr ausgeführt werden, niederohmig oder auch induktiv. Bei einem Dreileiternetz bzw. IT-Netz, bei dem kein Neutralleiter vorhanden ist, entfällt diese Betriebserdung.

Bei beiden vorgenannten Netzarten ist der Sternpunkt der besagten Sternschaltung bzw. der mindestens einen Rohrleitung bevorzugt geerdet, insbesondere starr geerdet. Bei einer Energieversorgung mit Neutralleiter (z.B. TN-Netz), bei der der Sternpunkt der Spannungsquelle (N-Anschluss) starr geerdet ist, kann die Erdung des Sternpunkts der besagten Sternschaltung bzw. der mindestens einen Rohrleitung gemäß einer Ausführungsvariante der Erfindung auch entfallen.

Bei der mindestens einen Rohrleitung bzw. der Mehrzahl an Rohrleitungen kann es sich um eine zusammenhängende Rohrleitung handeln. Die Rohrleitung kann jedoch auch mehrere Abschnitte aufweisen, die nicht miteinander in Fluidverbindung stehen und ggf. separat voneinander von je einem zu heizendem Fluid durchströmbar sind.

Gemäß einer bevorzugten Ausführungsform ist M=3, d.h., es wird ein Dreiphasenwechselstrom verwendet, der oftmals auch als Drehstrom bezeichnet wird. Es handelt sich dabei um einen Mehrphasenwechselstrom, der bekanntermaßen aus drei einzelnen Wechselströmen oder Wechselspannungen gleicher Frequenz besteht:

$$U_{L1}=U_0\cos(\omega t),$$

$$U_{L2}=U_0\cos(\omega t-120°),$$

$$U_{L3}=U_0\cos(\omega t-240°),$$

welche zueinander in ihren Phasenwinkeln fest um 120°, d.h., $2\pi/3$, verschoben sind.

Die Wechselspannungen erreichen ihre maximale Auslenkung zeitlich um je eine Drittelperiode versetzt nacheinander. Die zeitliche Verschiebung dieser so genannten Außenleiterspannungen zueinander wird durch einen Phasenverschiebungswinkel beschrieben. Die drei Leiter werden als Außenleiter bezeichnet und üblicherweise mit L1, L2 und L3 abgekürzt. Der Neutralleiter wird mit N bezeichnet.

Gemäß einer weiteren bevorzugten Ausführungsform ist vorgesehen, dass die mindestens eine Rohrleitung bzw. die Rohrleitungen jeweils M Schenkel aufweist bzw. aufweisen (also z.B. bei M=3 einen ersten, einen zweiten sowie einen dritten Schenkel), wobei jeder Schenkel einen ersten und einen zweiten Endabschnitt sowie einen die beiden Endabschnitte miteinander fluidleitend sowie elektrisch leitend verbindenden mittleren Abschnitt aufweist.

Vorzugsweise sind die beiden Endabschnitte des jeweiligen Schenkels mit dem Sternpunkt verbunden, d.h., an dem jeweiligen Endabschnitt bzw. an zwei miteinander verbundenen Endabschnitten zweier benachbarter Schenkel ist ein elektrischer Kontakt zum Sternpunkt vorgesehen.

Weiterhin ist bevorzugt vorgesehen, dass die mittleren Abschnitte der Schenkel jeweils mit einem zugeordneten Außenleiter L1 bis LM (z.B. bei M=3 L1, L2 oder L3) der mindestens einen Spannungsquelle elektrisch leitend verbunden sind, d.h., an dem jeweiligen mittleren Abschnitt ist ein elektrischer Kontakt zum zugeordneten Außenleiter vorgesehen, wobei insbesondere im Falle des Drehstromes (M=3) der mittlere Abschnitt des ersten Schenkels mit dem L1-Außenleiter, der mittlere Abschnitt des zweiten Schenkels mit dem L2-Außenleiter und der mittlere Abschnitt des dritten Schenkels mit dem L3-Außenleiter verbunden sind. Jeder Außenleiter ist genau einem mittleren Abschnitt eines Schenkels eindeutig zugeordnet.

Die mindestens eine Rohrleitung ist weiterhin bevorzugt so konfiguriert, dass bei M Schenkeln der zweite Endabschnitt des ersten Schenkels mit dem ersten Endabschnitt des zweiten Schenkels fluidleitend sowie elektrisch leitend verbunden ist, und dass (bei M>2) der zweite Endabschnitt des zweiten Schenkels mit dem ersten Endabschnitt des dritten Schenkels fluid- sowie elektrisch leitend verbunden ist. Dies wird so fortgeführt, bis der letzte (M-te) Schenkel erreicht ist. Die M Schenkel der mindestens einen Rohrleitung sind insbesondere so miteinander verbunden, dass sie nacheinander von einem darin fließenden Fluid durchströmbar sind. Weiterhin bildet bevorzugt der erste Endabschnitt des ersten Schenkels einen Einlass zum Einspeisen des Fluides in die mindestens eine Rohrleitung, wobei der zweite Endabschnitt des M-ten Schenkels vorzugsweise einen Auslass zum Auslassen des Fluides aus der mindestens einen Rohrleitung bildet. Der besagte Auslass kann mit einem Einlass einer weiteren Rohrleitung in Fluidverbindung stehen. Des Weiteren kann der besagte Einlass der mindestens einen Rohrleitung mit einem Auslass einer weiteren Rohrleitung in Fluidverbindung stehen (vgl. unten).

Für den Fall von M=3 ist diesbezüglich bevorzugt die mindestens eine Rohrleitung so konfiguriert, dass der zweite Endabschnitt des ersten Schenkels mit dem ersten Endabschnitt des zweiten Schenkels fluidleitend sowie elektrisch leitend verbunden ist, und dass der zweite Endabschnitt des zweiten Schenkels mit dem ersten Endabschnitt des dritten Schenkels fluidleitend sowie elektrisch leitend verbunden ist, d.h., die drei Schenkel der mindestens einen Rohrleitung sind insbesondere so miteinander verbunden, dass sie nacheinander von einem darin fließenden Fluid durchströmbar sind. Weiterhin bildet bevorzugt der erste Endabschnitt des ersten Schenkels einen Einlass zum Einspeisen des Fluides in die mindestens eine Rohrleitung, wobei der zweite Endabschnitt des dritten Schenkels vorzugsweise einen Auslass zum Auslassen des Fluides aus der mindestens einen Rohrleitung bildet. Der besagte Auslass kann mit einem Einlass einer weiteren Rohrleitung in Fluidverbindung stehen. Des Weiteren kann der besagte Einlass der mindestens einen Rohrleitung mit einem Auslass einer weiteren Rohrleitung in Fluidverbindung stehen (vgl. unten).

Bevorzugt sind miteinander in Fluid- und elektrischer Verbindung stehende Endabschnitte zweier benachbarter Schenkel über einen gemeinsamen Kontakt elektrisch mit dem Sternpunkt bzw. Neutralleiter verbunden, wobei der Kontakt z.B. an einem Übergang der beiden miteinander verbundenen Endabschnitte vorgesehen sein kann.

Die besagten Schenkel können natürlich auch separat zueinander ausgebildet sein und entsprechend nicht miteinander in Fluidverbindung stehen. In diesem Fall können mehrere Fluidströme unabhängig voneinander durch die Schenkel geführt und geheizt werden. Die Endabschnitte der Schenkel bilden dann Ein- bzw. Auslässe über die die einzelnen Schenkel separat mit Fluid beschickt werden können.

Die besagten Schenkel sind, sofern sie miteinander verbunden sind, vorzugsweise einstückig über ihre Endabschnitte an benachbarte Schenkel angeformt. Andere fluidleitende und elektrisch leitende Verbindungen sind auch denkbar. Des Weiteren ist jeweils der zwischen zwei Endabschnitten eines Schenkels vorgesehene mittlere Abschnitt bevorzugt einstückig an die beiderseitig vorgesehenen Endabschnitte angeformt. Andere fluid- bzw. elektrisch leitende Verbindungen sind diesbezüglich auch denkbar. Grundsätzlich können die Schenkel alle erdenklichen Formen bzw. Verläufe annehmen.

Vorzugsweise sind die Schenkel im Wesentlichen hinsichtlich Ihrer Dimension und Geometrie bzw. Form identisch ausgestaltet, so dass sie im Wesentlichen gleiche ohmsche Verbraucher darstellen. Bei unterschiedlich ausgestalteten Schenkeln können ggf. ausgleichende Ohmsche oder kapazitive bzw. induktive Widerstände zusätzlich vorgesehen werden.

Gemäß einer besonders bevorzugten Ausführungsform der Erfindung sind die Schenkel jeweils als Schleife ausgebildet, wobei der mittlere Abschnitt des jeweiligen Schenkels ein Ende der jeweiligen Schleife ausbildet, das den beiden bevorzugt benachbart zueinander angeordneten Endabschnitten der jeweiligen Schleife gegenüberliegt, wobei insbesondere im Bereich des jeweiligen Endes der jeweils zugeordnete Außenleiter mit dem jeweiligen Schenkel elektrisch leitend verbunden ist.

Das Ende der jeweiligen Schleife bzw. Schenkels wird dabei bevorzugt durch einen Umkehrbogen des jeweiligen mittleren Abschnitts gebildet, in dem das in dem jeweiligen Schenkel bzw. in der jeweiligen Schleife vom ersten Endabschnitt heran strömende Fluid seine Richtung ändert und zum zweiten Endabschnitt (oder umgekehrt) zurückfließt.

Vorzugsweise erstrecken sich die Schenkel bzw. Schlaufen der mindestens einen Rohrleitung jeweils entlang einer Längsachse, wobei die Schenkel bzw. Schleifen insbesondere entlang der Längsachse die gleiche Länge aufweisen (siehe auch oben).

Weiterhin ist bevorzugt vorgesehen, dass die Endabschnitte der Schenkel der mindestens einen Rohrleitung bzw. der Rohrleitungen mit dem jeweiligen elektrischen Kontakt zum Sternpunkt bzw. Neutralleiter in einem zentralen Bereich angeordnet sind, von dem aus sich die Schenkel entlang einer radialen Richtung nach außen erstrecken, und zwar insbesondere zu dem jeweiligen Ende bzw. Umkehrbogen, an dem bevorzugt der jeweilige elektrische Kontakt zum zugeordneten Außenleiter L1 bis LM (bzw. bei M=3 L1, L2 oder L3) vorgesehen ist.

Bei einer sternförmigen Anordnung dreier Schenkel einer Rohrleitung zueinander können die Längsachsen je zweier benachbarter Schenkel z.B. einen Winkel von 120° einschließen.

Gemäß einer bevorzugten Ausführungsform sind eine Mehrzahl der oben beschriebenen Rohrleitungen sowie insbesondere eine Mehrzahl an Spannungsquellen vorgesehen, wobei jeder Rohrleitung je eine Spannungsquelle zugeordnet ist. Die Außenleiter einer Spannungsquelle sind dann wiederum so mit der zugeordneten Rohrleitung verbunden, dass wiederum eine Sternschaltung gebildet wird, bei der jeder Außenleiter über zumindest einen Teil der jeweiligen Rohrleitung elektrisch leitend mit dem Sternpunkt der Sternschaltung verbunden ist, wobei ein ggf. vorhandener Neutralleiter der jeweiligen Spannungsquelle elektrisch leitend mit dem Sternpunkt der zugeordneten Rohrleitung verbunden sein kann (siehe oben).

Bevorzugt sind wiederum die Spannungsquellen als Dreiphasenwechselspannungsquellen ausgebildet (d.h. M=3), so dass der in der jeweiligen Rohrleitung erzeugte Strom zum direkten Joulschen Heizen der jeweiligen Rohrleitung ein Dreiphasenwechselstrom ist.

Die Rohrleitungen weisen also wiederum bevorzugt jeweils M Schenkel bzw. einen ersten, einen zweiten sowie einen dritten Schenkel auf (bei M=3), wobei jeder Schenkel der jeweiligen Rohrleitung einen ersten und einen zweiten Endabschnitt sowie einen die beiden Endabschnitte miteinander verbindenden mittleren Abschnitt aufweist. Die beiden Endabschnitte des jeweiligen Schenkels des jeweiligen Rohrleitungsabschnitts sind bevorzugt, wie oben beschrieben, elektrisch leitend mit dem Sternpunkt der jeweiligen Rohrleitung bzw. dem Neutralleiter N der zugeordneten Spannungsquelle verbunden, wohingegen die mittleren Abschnitte des jeweiligen Rohrleitungsabschnittes jeweils bevorzugt - wie oben beschrieben - mit einem zugeordneten Außenleiter (L1 bis LM bzw. bei M=3 L1, L2 oder L3) der zugeordneten Spannungsquelle verbunden sind.

Die einzelnen Schenkel der Mehrzahl an Rohrleitungen sind bevorzugt, wie oben dargelegt, miteinander verbunden (oder separat zueinander ausgebildet) und des Weiteren bevorzugt als Schleifen ausgebildet, wobei wiederum der mittlere Abschnitt des jeweiligen Schenkels bevorzugt ein Ende bzw. einen Umkehrbogen der jeweiligen Schleife ausbildet (siehe oben), wobei vorzugsweise im Bereich des jeweiligen Endes bzw. am jeweiligen Umkehrbogen der elektrische Kontakt zum jeweils zugeordneten Außenleiter (L1 bis LM bzw. bei M=3 L1, L2 oder L3) vorgesehen ist (siehe auch oben).

Vorzugsweise sind die Endabschnitte der Schenkel der jeweiligen Rohrleitung mit dem jeweiligen, ggf. gemeinsamen elektrischen Kontakt zum Sternpunkt bzw. Neutralleiter N in einem zentralen Bereich angeordnet, von dem aus sich die Schenkel der Rohrleitungen entlang einer radialen Richtung nach außen erstrecken, wobei die besagten Enden bzw. Umkehrbögen radial gesehen am weitesten außen liegen (z.B. auf einem gedachten Kreis um den zentralen Bereich herum).

Bei einer Mehrzahl an Rohrleitungen können mehrere oder auch sämtliche der Rohrleitungen in Serie miteinander in Fluidverbindung stehen, so dass sie nacheinander von dem Fluid durchströmbar sind.

Weiterhin besteht auch die Möglichkeit, einige oder sämtliche Rohrleitungen parallel zu verschalten, d.h., so zu konfigurieren, dass das Fluid in mehrere Teilströme aufgeteilt wird, die dann einzelne zugeordnete Rohrleitungen parallel durchströmen.

Eine beliebige Konfiguration von in Serie oder parallel geschalteten Rohrleitungen ist natürlich ebenfalls möglich.

Bei dem erfindungsgemäßen Verfahren durchströmt das Fluid eine oder mehrere Rohrleitungen der Einrichtung und wird in diesen erhitzt, indem die mindestens eine Rohrleitung bzw. die mehreren Rohrleitungen durch einen in der mindestens einen Rohrleitung oder in den mehreren Rohrleitungen fließenden Mehrphasenwechselstrom bzw. Dreiphasenwechselstrom erhitzt wird, so dass in der mindestens einen Rohrleitung oder in den mehreren Rohrleitungen Joulesche Wärme erzeugt wird, die auf das Fluid übertragen wird, so dass dieses beim Durchströmen der mindestens einen Rohrleitung bzw. der mehreren Rohrleitungen erhitzt wird.

Gemäß einer Variante des erfindungsgemäßen Verfahrens ist vorgesehen, dass als Fluid ein vorgewärmtes Kohlenwasserstoff-Dampfgemisch geheizt wird, um die Kohlenwasserstoffe aufzuspalten. Die Einrichtung wird also für den Wärmeeintrag im Reaktorteil eines Spaltofens zur Spaltung des vorgewärmten Kohlenwasserstoff-Dampfgemisches verwendet. Dies ist eine stark endotherme Reaktion, bei der das Produktgas den Reaktorteil mit Temperaturen von typischerweise 800°C bis 880 °C verlässt.

Gemäß einer weiteren Variante ist vorgesehen, dass die mindestens eine Rohrleitung bzw. die mehreren Rohrleitungen als Reaktionsrohr(e) eines Reformers ausgebildet sind.

Gemäß einer Ausgestaltung des erfindungsgemäßen Verfahrens ist vorgesehen, dass als Fluid ein thermisch zu spaltender Kohlenwasserstoff, insbesondere ein Gemisch aus Kohlenwasserstoffen geheizt wird.

Gemäß einer weiteren Ausgestaltung des erfindungsgemäßen Verfahrens ist alternativ oder ergänzend vorgesehen, dass als Fluid Wasser bzw. Wasserdampf geheizt wird, wobei jener Wasserdampf insbesondere auf eine Reaktoreintrittstemperatur im Bereich von 550°C bis 700°C geheizt wird und insbesondere dem bzw. den zu spaltenden Kohlenwasserstoffen zugegeben wird.

Insbesondere kann das zu spaltende Gemisch, das auch als Reformer-Einsatzgas bezeichnet wird, und das Wasserdampf sowie einen bzw. verschiedene Kohlenwasserstoffe (z.B. $CH_4$ bis Naphtha) sowie ggf. Wasserstoff und sonstige Komponenten, wie z.B. $N_2$, Ar, He, CO, $CO_2$, und/oder MeOH aufweist, mit dem erfindungsgemäßen Verfahren auf eine Reformereintrittstemperatur gebracht bzw. überhitzt werden, die bevorzugt im Temperaturbereich von 250°C bis 730 °C, bevorzugt 320 °C bis 650 °C liegt, insbesondere bei einem Druck des Einsatzgases im Bereich von 10 bar bis 50 bar, bevorzugt 15 bis 40 bar.

Weiterhin kann mittels des erfindungsgemäßen Verfahrens als Fluid die Verbrennungsluft des Reformerofens vorgewärmt werden, und zwar insbesondere auf eine Temperatur im Bereich von 200 °C bis 800 °C, bevorzugt 400 °C bis 700 °C.

Gemäß einer Variante der Erfindung wird mittels des erfindungsgemäßen Verfahrens zumindest ein Reaktionsrohr bzw. Reaktionsrohre des Reformerofens bzw. das darin strömende Fluid beheizt (die mindestens eine Rohrleitung der Einrichtung kann also als Reaktionsrohr eines Reformers ausgebildet sein). Hier erfolgt also mittels des erfindungsgemäßen Verfahrens der Wärmeeintrag durch Direktbeheizung in die katalysatorgefüllten Reaktionsrohre des Reformerofens. Hierbei kann das Produktgas bestehend aus den Hauptkomponenten $H_2$, CO, $CO_2$, $CH_4$, $H_2O$ und Inerten zusätzlich während der Direktbeheizung noch parallel durch Brenner in der Strahlungszone des Reformerofens geheizt werden. Die Reaktion ist endotherm. Das reformierte Gas verlässt die Strahlungszone des Reformerofens in der Regel im Temperaturbereich von 780°C bis 1050 °C, bevorzugt 820 °C bis 950 °C. Der Druckbereich des Gases liegt bevorzugt im Bereich von 10 bar bis 50 bar, bevorzugt 15 bis 40 bar.

Insbesondere kann weiterhin mittels des erfindungsgemäßen Verfahrens als Fluid das zu spaltende, trockene Einsatzgas (also insbesondere vor der Vermischung mit Wasserdampf), das zumindest ein bzw. verschiedene Kohlenwasserstoffe (z.B. $CH_4$ bis Naphtha) sowie ggf. Wasserstoff und sonstige Komponenten, wie z.B. $N_2$, Ar, He, CO, $CO_2$ und/oder MeOH, aufweist, zur katalytischen Vorreinigung erhitzt werden, insbesondere auf eine Temperatur im Bereich von 100°C bis 500 °C, bevorzugt 200 °C bis 400 °C, und zwar bei einem Druck des Gases im Bereich von bevorzugt 10 bar bis 50 bar, bevorzugt 15 bis 45 bar.

Weiterhin kann allgemein das erfindungsgemäße Verfahren dazu verwendet werden als Fluid Wasser zu erhitzen, um z.B. in allen erdenklichen Prozessen Prozessdampf zu erzeugen.

Weitere Merkmale und Vorteile der vorliegenden Erfindung sollen bei der Beschreibung von Ausführungsbeispielen anhand der Figuren erläutert werden. Es zeigen:

Fig. 1　eine schematische Darstellung einer Rohrleitung einer Einrichtung zum Heizen eines Fluides;

Fig. 2　eine weitere Abwandlung der in Figur 1 gezeigten Ausführungsform;

Fig. 3　eine weitere schematische Darstellung einer Rohrleitung einer Einrichtung zum Heizen eines Fluides;

Fig. 4　eine Darstellung einer Anordnung mehrerer Rohrleitungen einer Einrichtung zum Heizen eines Fluides;

Fig. 5　schematische Darstellung der Verschaltung der Außenleiter und des Neutralleiters bei einem TN-Netz; und

Fig. 6　schematische Darstellung der Verschaltung der Außenleiter bei einem ITNetz.

Im Folgenden werden zunächst Ausführungsformen der Erfindung anhand einer Rohrleitung 100 dargestellt. Die anhand einer Rohrleitung dargestellten Maßnahmen können dabei natürlich jeweils auf mehrere Rohrleitungen 100 angewendet werden.

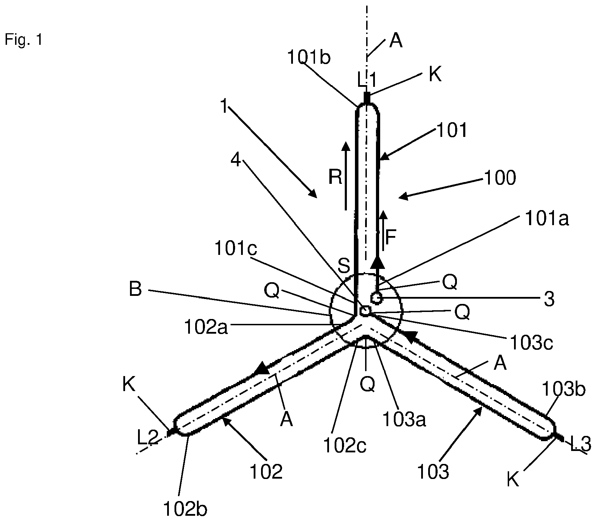

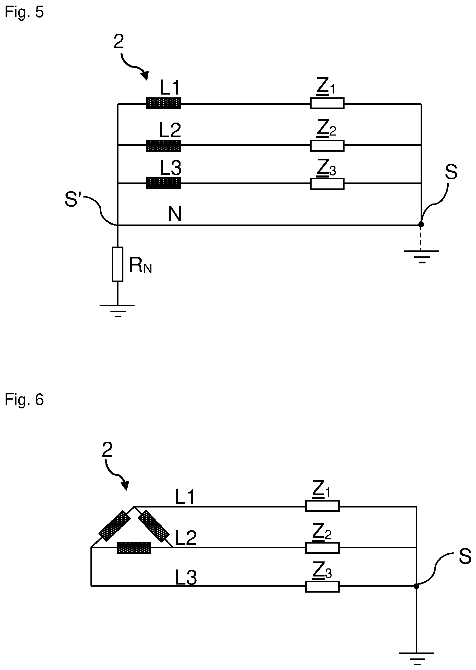

Gemäß Figur 1 kann bei einer Drehstromdirektheizung einer Rohrleitung 100 in einer Einrichtung 1 zum Heizen eines Fluides F ein Sternpunkt S geschaffen werden. Dabei werden die drei Phasen L1, L2 und L3 eines Drehstromsystems bzw. einer Drehspannungsquelle 2 (vgl. Fig. 5) an die Schenkel 101, 102, 103 der Rohrleitung 100 und vorzugsweise der N-Leiter (Neutralleiter), sofern vorhanden, an den Sternpunkt S angeschlossen. Bei einer in der Energieversorgung üblichen starren bzw. niederohmigen Erdung des N-Anschlusses bzw. des Sternpunktes S' der Spannungsquelle 2 mit der Erde (PE) und einem Anschluss des Neutralleiters N an den Sternpunkt S der Rohrleitung 100 kann auf eine Erdung des Sternpunktes S an der Rohrleitung 100 verzichtet werden.

Gemäß den Figuren 5 und 6 kann die Erfindung sowohl im Rahmen eines Netzes mit (vorzugsweise drei) Außenleitern und Neutralleiter (z.B. TN-Netz) als auch bei einem Netz ohne Neutralleiter (z.B. IT-Netz) angewendet werden.

Fig. 5 zeigt die drei Außenleiter L1, L2, L3 sowie den Neutralleiter N der Spannungsquelle 2, wie sie z.B. bei einem TN-Netz vorhanden sind. Der Sternpunkt S' der Spannungsquelle 2, mit dem der Neutralleiter N elektrisch leitend verbunden ist, ist dabei über einen Widerstand $R_N$ geerdet, wobei insbesondere $R_N=0$ sein kann (starre Erdung) oder z.B. niederohmig. $\underline{Z}_1$, $\underline{Z}_2$, $\underline{Z}_3$ stellen die Lasten bzw. Impedanzen dar, die durch die mindestens eine Rohrleitung 100 bzw. deren Schenkel 101, 102, 103 gebildet werden. Diese sind im Sternpunkt S der Last bzw. Rohrleitung 100 zusammengeschaltet, wobei der Neutralleiter N mit dem Sternpunkt S elektrisch leitend verbunden ist. Bei einer starren Betriebserdung des Sternpunktes S' der Spannungsquelle 2 ($R_N=0$) kann eine Erdung des Sternpunktes S entfallen, ist aber bevorzugt vorhanden.

Figur 6 zeigt ein Dreileiternetz (z.B. IT-Netz), bei dem kein Neutralleiter N vorhanden ist. Hier ist der Sternpunkt S, der durch Zusammenschalten der Impedanzen $\underline{Z}_1$, $\underline{Z}_2$, $\underline{Z}_3$ gebildet wird, bevorzugt starr geerdet.

Im Folgenden wird ohne Beschränkung der Allgemeinheit von drei Außenleitern L1, L2, L3 sowie einem Neutralleiter N ausgegangen. Es kann jedoch auf den Neutralleiter N verzichtet werden (siehe oben) oder die Zahl der Außenleiter variiert werden (siehe oben).

Im Einzelnen erstreckt sich ein erster Schenkel 101 der Rohrleitung 100 ausgehend von einem ersten Endabschnitt 101a bzw. vom Einlass 3, über den Fluid F in die Rohrleitung 100 eingespeist wird, entlang einer Längsachse A zu einem Umkehrbogen eines mittleren Abschnitts 101b des ersten Schenkels 101, von dem aus sich der mittlere Abschnitt 101b des erste Schenkels 10 zurück zu einem zweiten Endabschnitt 101c erstreckt, der benachbart zum ersten Endabschnitt 101a in einem zentralen Bereich B angeordnet ist. Der zweite Endabschnitt 101c des ersten Schenkels 101 geht in einen ersten Endabschnitt 102a des zweiten Schenkels 102 über, der sich in analoger Weise über einen Umkehrbogen seines mittleren Abschnitts 102b zu einem zweiten Endabschnitt 102c des zweiten Schenkels 102 erstreckt, der wiederum in einen ersten Endabschnitt 103a des dritten Schenkels 103 übergeht, der sich in analoger Weise über einen Umkehrbogen seines mittleren Abschnittes 103b zu einem zweiten Endabschnitt 103c erstreckt, an dem ein Auslass 4 zum Auslassen des (erhitzten) Fluids F aus der Rohrleitung 100 vorgesehen ist. Die drei Längsachsen A der schleifenförmig ausgebildeten Schenkel 101, 102, 103 sind gemäß Fig. 1 bevorzugt sternförmig angeordnet, d.h., je zwei benachbarte Schenkel 101, 102; 102, 103; 103, 101 schließen einen Winkel von 120° ein.

Vorliegend ist an jedem Umkehrbogen eines mittleren Abschnittes 101b, 102b, 103b einer Schleife 101, 102, 103 ein Kontakt K zu einem Außenleiter L1, L2 bzw. L3 einer Drehstromquelle 2 vorgesehen, wobei die Endabschnitte 101a, 101c, 102a, 102c, 103a, 103c über Kontakte Q mit dem Sternpunkt S verbunden sind. Dabei sind bevorzugt miteinander verbundene Endabschnitte 101c, 102a; 102c, 103a der Schenkel 101, 102, 103 über einen gemeinsamen Kontakt Q am Übergang der jeweiligen Endabschnitte mit dem Sternpunkt S bzw. mit dem Neutralleiter N verbunden.

Die Anordnung gemäß Figur 1 kann natürlich auch bei allgemein M Phasen angewendet werden, wobei M eine natürliche Zahl größer gleich zwei ist. Es werden dann entsprechend M Schenkel vorgesehen und wie oben beschrieben verschaltet.

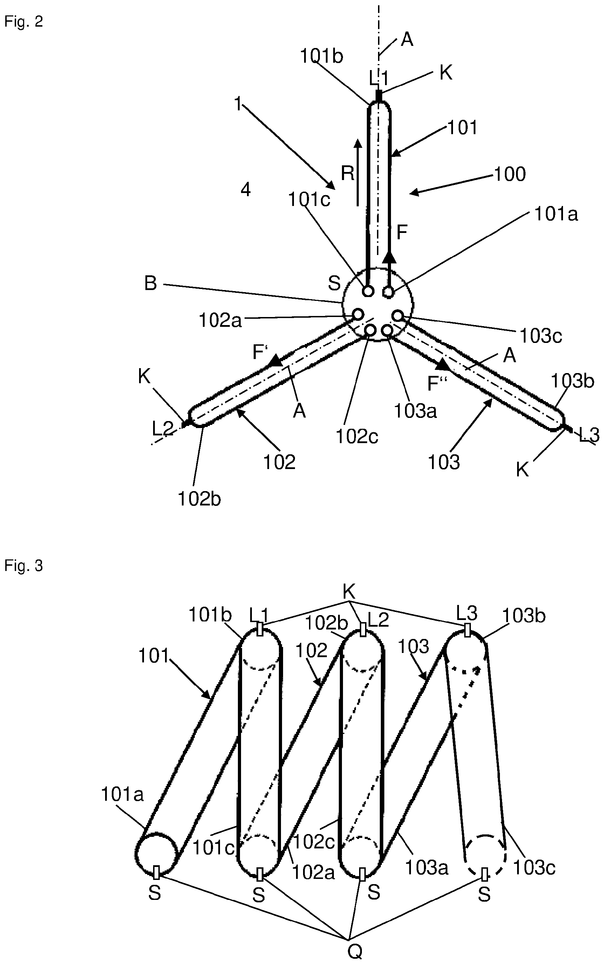

Weiterhin können gemäß Figur 2 bei einer Anordnung gemäß Figur 1 die Schenkel 101, 102, 103 separat zueinander ausgebildet sein, so dass sie von einzelnen Fluidströmen F, F', F" unabhängig voneinander durchströmbar sind. Die ersten Endabschnitte 101a, 102a, 103a können dabei als Einlässe für die Fluidströme F, F', F" und die zweiten Endabschnitte 101c, 102c, 103c als Auslässe für die Fluidströme ausgebildet sein. Wobei jene Endabschnitte 101a, 102a, 103a bzw. 101c, 102c, 103c wiederum mit dem Sternpunkt S verbunden sind.

Fig. 3 zeigt eine Variation des Verlaufs der Schenkel 101, 102, 103, wobei diese nun im Unterschied zur Figur 1 nebeneinander verlaufen.

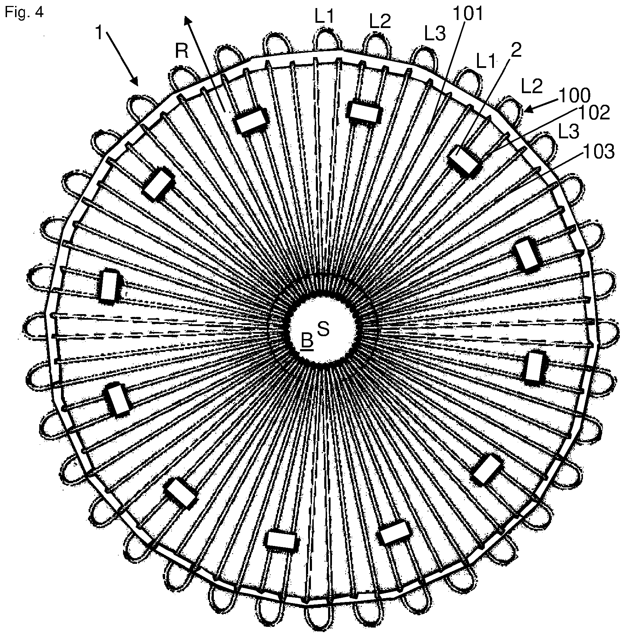

Diese Konfiguration ermöglicht prinzipiell eine Anordnung von mehreren Rohrleitungen 100 nach Art der Figur 3 nebeneinander, wie sie in Fig. 4 gezeigt ist, wobei hier die einzelnen Schenkel 101, 102, 103 jeweils in radialer Richtung R ausgehend von einem zentralen Bereich B nach außen verlaufen, in dem die einzelnen Endabschnitte angeordnet sind, und dort mit dem Sternpunkt S verbunden sind. Die Umkehrbögen der einzelnen, schlaufenförmig ausgebildeten Schenkel 101, 102, 103 liegen nun in radialer Richtung R weiter außen auf einem gedachten Kreis und sind jeweils mit einer Phase L1, L2 bzw. L3 einer Drehstromquelle 2 verbunden.

Jeder Rohrleitung 100 ist dabei einer Drehstromquelle 2 zugeordnet, die vorzugsweise oberhalb der Schenkel angeordnet ist und radial weiter innen angeordnet ist als die Umkehrbögen. Hierdurch können die Zuleitungen zu S (bzw N) sowie L1, L2, L3 minimiert werden. Die Rohrleitungen 100 weisen jeweils drei schleifenförmige Schenkel 101, 102, 103 auf, deren Umkehrbögen jeweils mit einer der Außenleiterphase L1, L2 bzw. L3 der zugeordneten Spannungsquelle 2 verbunden sind.

Der Übersichtlichkeit halber ist nur eine Rohrleitung 100 in der Fig. 4 bezeichnet. Die Rohrleitungsabschnitte 100 gemäß Fig. 4 können, wie gezeigt, in Serie angeordnet sein, so dass sie nacheinander vom Fluid F durchflossen werden können. Es ist jedoch auch möglich, im zentralem Bereich B einen Verteiler vorzusehen, der das Fluid F auf die einzelnen Rohrleitungen 100 mit den jeweils drei Schenkeln 101, 102, 103 verteilt, so dass diese parallel vom Fluid F durchflossen werden. Hiernach kann das (erhitzte) Fluid F wieder zusammengeführt und seiner weiteren Verwendung zugeführt werden.

In den vorstehend beschriebenen Beispielen erzeugt der Dreiphasenstrom in den Schenkeln 101, 102, 103 jeweils aufgrund des elektrischen Widerstands der Schenkel 101, 102, 103 Joulsche Wärme, die auf das in den Schenkeln 101, 102, 103 fließende Fluid F übertragen wird, wobei dieses erwärmt wird.

Natürlich kann die Anordnung gemäß Figuren 3 und 4 ebenfalls auf M Phasen (M größer oder gleich zwei) verallgemeinert werden.

Die in den Figuren 1 bis 4 gezeigte Konfiguration einer Drehstrom-Direkt-Beheizung bzw. die dort gezeigte sternförmige Anordnung der einzelnen Schenkel 101, 102, 103 ist jedoch nicht zwingend erforderlich. Im Allgemeinen ist jedwede geometrische Anordnung von Rohrleitungen 100 bzw. Schenkeln 101, 102, 103 denkbar. Das erfindungsgemäße Verfahren bzw. die Einrichtung 1 ist prinzipiell bei allen Drücken, Temperaturen, Abmessungen, etc. anwendbar.

In der technischen Ausführung werden wegen des höheren spezifischen Widerstandes Edelstähle gegenüber Kohlenstoffstählen für die Rohrleitungen 100 bevorzugt. Weiterhin wird vorzugsweise die Zuleitung des Mehrphasen- bzw. Drehphasenwechselstroms mit einem deutlich niedrigeren Widerstand als die das Fluid F führende Rohrleitung ausgeführt, um die Wärmeerzeugung der Zuleitung zu minimieren, da diese in der Regel nicht erwünscht ist.

Die erfindungsgemäße Lösung ist insbesondere bei der Beheizung von Medien, die eine Isolationsminderung verursachen (z.B. Verkokung bei Spaltöfen), mit Vorteil anwendbar. Es besteht vorliegend ein vergleichsweise geringes Risiko eines unerwünschten Stromflusses, so dass ggf. sogar auf eine eingangs erwähnt AbschaltEinrichtung verzichtet werden kann.

Des Weiteren besteht die Möglichkeit, die Erwärmung in den jeweils drei Schenkeln 101, 102, 103 zu steuern, indem der Stromfluss der jeweiligen Phasen L1, L2, L3 entsprechend eingestellt wird (das gilt auch bei M Phasen mit M größer oder gleich zwei).

Grundsätzlich kann die erfindungsgemäße Erwärmung eines Fluides bei allen Medien in elektrisch leitfähigen Rohrleitungen angewendet werden. Bei sehr gut leitenden Flüssigkeiten (im Vergleich zu der elektrischen Leitfähigkeit der Rohrleitung) muss diese Tatsache ggf. in die Berechnung des Stromflusses einbezogen werden. Der geometrische Verlauf der Rohrleitungen bzw. Rohrleitungsabschnitte ist mit Vorteil flexibel und kann an die jeweiligen Anforderungen angepasst werden. Weiterhin kann das Rohrleitungsmaterial an die Prozessanforderungen angepasst werden. Ströme, Spannungen und die Frequenz können passend zur Geometrie gewählt werden und unterliegen keiner grundsätzlichen Limitierung. Die maximal erreichbare Temperatur wird durch das eingesetzte Rohrleitungsmaterial begrenzt.

**Bezugszeichenliste**

| 1 | Einrichtung |
|---|---|
| 2 | Drehstromquelle |
| 3 | Einlass |
| 4 | Auslass |
| 100 | Rohrleitung |
| 101, 102, 103 | Schenkel |

(fortgesetzt)

| 101a, 102a, 103a | Erster Endabschnitt |
|---|---|
| 101b, 102b, 103b | Mittlerer Abschnitt |
| 101c, 102c, 103c | Zweiter Endabschnitt |
| L1, L2, L3 | Außenleiter |
| B | Zentraler Bereich |
| N | Neutralleiter |
| K, Q | Elektrische Kontakte |
| F, F', F" | Fluid |
| A | Längsachse |
| R | Radiale Richtung |
| S | Sternpunkt |
| S' | Sternpunkt Spannungsquelle |

**Patentansprüche**

1.  Verfahren zum Heizen eines Fluides (F) unter Verwendung einer Einrichtung zum Heizen eines Fluides, mit:

    - zumindest einer elektrisch leitfähigen Rohrleitung (100) zur Aufnahme des Fluides (F), und
    - zumindest einer mit der mindestens einen Rohrleitung (100) verbundenen Spannungsquelle (2), wobei die mindestens eine Spannungsquelle (2) dazu ausgebildet ist, einen elektrischen Strom in der mindestens einen Rohrleitung (100) zu erzeugen, der die mindestens eine Rohrleitung (100) zum Heizen des Fluides (F) erwärmt,
    - wobei die mindestens eine Spannungsquelle (2) zumindest M Außenleiter (L1,...,LM) aufweist, wobei M eine natürliche Zahl größer oder gleich zwei ist, und wobei die mindestens eine Spannungsquelle (2) dazu ausgebildet ist, an den Außenleitern (L1,...,LM) eine Wechselspannung bereitzustellen, wobei jene Wechselspannungen gegeneinander um $2\pi/M$ phasenverschoben sind, und wobei die Außenleiter (L1,...,LM) so mit der mindestens einen Rohrleitung (100) elektrisch leitend verbunden sind, dass eine Sternschaltung gebildet wird, bei der jeder Außenleiter (L1,...,LM) über zumindest einen Teil der mindestens einen Rohrleitung (100) elektrisch leitend mit dem Sternpunkt (S) der Sternschaltung verbunden ist, und
    - wobei das Fluid die mindestens eine oder mehrere Rohrleitungen der Einrichtung durchströmt und in diesen erhitzt wird, indem die mindestens eine Rohrleitung bzw. die mehreren Rohrleitungen durch einen in der mindestens einen Rohrleitung oder in den mehreren Rohrleitungen fließenden Mehrphasenwechselstrom, erhitzt werden, so dass in der der mindestens einen Rohrleitung oder in den mehreren Rohrleitungen Joulesche Wärme erzeugt wird, die auf das Fluid übertragen wird, so dass dieses beim Durchströmen der mindestens einen Rohrleitung oder der mehreren Rohrleitungen erhitzt wird,

    **dadurch gekennzeichnet, dass**

    - als Fluid ein vorgewärmtes Kohlenwasserstoff-Dampfgemisch geheizt wird, um die Kohlenwasserstoffe aufzuspalten, oder
    - die mindestens eine Rohrleitung als Reaktionsrohr eines Reformes ausgebildet ist.

2.  Verfahren nach Anspruch 1, **dadurch gekennzeichnet, dass** die zumindest eine Spannungsquelle (2) einen Neutralleiter (N) aufweist.

3.  Verfahren nach einem der vorhergehenden Ansprüche, **dadurch gekennzeichnet, dass** M gleich drei ist.

4.  Verfahren nach einem der vorhergehenden Ansprüche, **dadurch gekennzeichnet, dass** die mindestens eine Rohrleitung (100) M Schenkel (101) aufweist, wobei jeder Schenkel (101) einen ersten und einen zweiten Endabschnitt (101a, 101 c) sowie einen mittleren Abschnitt (101b) aufweist, der die beiden Endabschnitte (101a, 101c) miteinander fluidleitend sowie elektrisch leitend verbindet.

5.  Verfahren nach Anspruch 4, **dadurch gekennzeichnet, dass** die beiden Endabschnitte (101a, 101c, 102a, 102c, 103a, 103c) des jeweiligen Schenkels (101, 102, 103) elektrisch leitend mit dem Sternpunkt (S) verbunden sind.

6.  Verfahren nach einem der Ansprüche 4 bis 5, **dadurch gekennzeichnet, dass** die mittleren Abschnitte (101b, 102b, 103b) der Schenkel (101, 102, 103) jeweils mit einem zugeordneten Außenleiter (L1, L2, L3) der mindestens einen Spannungsquelle (2) elektrisch leitend verbunden sind.

7.  Verfahren nach Anspruch 3 oder einem der Ansprüche 4 bis 6 soweit rückbezogen auf Anspruch 3, **dadurch gekennzeichnet, dass** der zweite Endabschnitt (101c) des ersten Schenkels (101) mit dem ersten Endabschnitt (102a) des zweiten Schenkels (102) fluidleitend sowie elektrisch leitend verbunden ist, und dass der zweite Endabschnitt (102c) des zweiten Schenkels (102) mit dem ersten Endabschnitt (103a) des dritten Schenkels (103) fluidleitend sowie elektrisch leitend verbunden ist, .

**8.** Verfahren nach einem der Ansprüche 4 bis 6, **dadurch gekennzeichnet, dass** die Schenkel (101, 102, 103) nicht miteinander in Fluidverbindung stehen und dazu ausgebildet sind, separat voneinander je ein zu heizendes Fluid (F, F', F") zu führen.

**9.** Verfahren nach einem der Ansprüche 4 bis 8, **dadurch gekennzeichnet, dass** die Schenkel (101, 102, 103) jeweils als Schleife ausgebildet sind, wobei der mittlere Abschnitt (101b, 102b, 103b) des jeweiligen Schenkels (101, 102, 103) ein Ende der jeweiligen Schleife (101, 102, 103) ausbildet.

**10.** Verfahren nach einem der Ansprüche 4 bis 9, **dadurch gekennzeichnet, dass** sich die Schenkel (101, 102, 103) jeweils entlang einer Längsachse (A) erstrecken.

**11.** Verfahren nach einem der Ansprüche 4 bis 10, **dadurch gekennzeichnet, dass** die Endabschnitte (101a, 101c; 102a, 102c; 103a, 103c) der Schenkel (101, 102, 103) der mindestens einen Rohrleitung (100) in einem zentralen Bereich (B) angeordnet sind, von dem aus sich die Schenkel (102, 102, 103) entlang einer radialen Richtung (R) nach außen erstrecken.

**12.** Verfahren nach Anspruch 10 oder 11, **dadurch gekennzeichnet, dass** die Längsachsen (A) je zweier benachbarter Schenkel (101, 102; 102, 103; 103, 101) einen Winkel von 120° einschließen.

**13.** Verfahren nach einem der vorhergehenden Ansprüche, **dadurch gekennzeichnet, dass** eine Mehrzahl an Rohrleitungen (100) sowie insbesondere eine Mehrzahl an Spannungsquellen (2) vorgesehen sind.

**14.** Verfahren nach Anspruch 13, **dadurch gekennzeichnet, dass** mehrere oder sämtliche der Rohrleitungen (100) in Serie miteinander in Fluidverbindung stehen, so dass sie nacheinander von dem Fluid (F) durchströmbar sind.

**15.** Verfahren nach einem der vorhergehenden Ansprüche, **dadurch gekennzeichnet, dass** als Fluid ein thermisch zu spaltender Kohlenwasserstoff geheizt wird.

**16.** Verfahren nach einem der Ansprüche 1 bis 14, **dadurch gekennzeichnet, dass** als Fluid Wasser oder Wasserdampf geheizt wird.

**17.** Verfahren nach einem der Ansprüche 1 bis 14, **dadurch gekennzeichnet, dass** als Fluid Verbrennungsluft eines Reformerofens vorgewärmt wird.

**Claims**

**1.** A method for heating a fluid (F) using a device for heating a fluid, having:

- at least one electrically conductive pipeline (100) for receiving the fluid (F), and
- at least one voltage source (2) connected to the at least one pipeline (100), wherein the at least one voltage source (2) is designed to generate, in the at least one pipeline (100), an electrical current which heats the at least one pipeline (100) to heat the fluid (F),
- wherein the at least one voltage source (2) has at least M outer conductors (L1, ..., LM), wherein M is a natural number greater than or equal to two, and wherein the at least one voltage source (2) is designed to provide an alternating voltage on the outer conductors (L1, ..., LM), wherein those alternating voltages are phase-shifted in relation to one another by $2\pi/M$, and wherein the outer conductors (L1, ..., LM) are electrically conductively connected to the at least one pipeline (100) such that a star circuit is formed in which each outer conductor (L1, ..., LM) is electrically conductively connected to the star point (S) of the star circuit via at least a portion of the at least one pipeline (100), and
- wherein the fluid flows through the at least one or more pipelines of the device and is heated therein in that the at least one pipeline or the plurality of pipelines is heated by a multi-phase alternating current flowing in the at least one pipeline or in the plurality of pipelines, so that Joule heat is generated in the at least one pipeline or in the plurality of pipelines, which Joule heat is transmitted to the fluid so that it is heated when flowing through the at least one pipeline or the plurality of pipelines,

**characterized in that**

- a preheated hydrocarbon vapor mixture as a fluid is heated in order to split the hydrocarbons, or
- the at least one pipeline is designed as a reaction tube of a reformer.

**2.** The method according to Claim 1, **characterized in that** the at least one voltage source (2) has a neutral conductor (N).

**3.** The method according to one of the preceding claims, **characterized in that** M is equal to three.

**4.** The method according to one of the preceding claims, **characterized in that** the at least one pipeline (100) has M branches (101), wherein each branch (101) has a first and a second end segment (101a, 101c) as well as a middle segment (101b) which connects the two end segments (101a, 101c) to one another fluidically and electrically conductively.

5. The method according to Claim 4, **characterized in that** the two end segments (101a, 101c, 102a, 102c, 103a, 103c) of the respective branch (101, 102, 103) are electrically conductively connected to the star point (S).

6. The method according to one of Claims 4 to 5, **characterized in that** the middle segments (101b, 102b, 103b) of the branches (101, 102, 103) are respectively electrically conductively connected to an associated outer conductor (L1, L2, L3) of the at least one voltage source (2).

7. The method according to Claim 3 or one of Claims 4 to 6, insofar as dependent on Claim 3, **characterized in that** the second end segment (101c) of the first branch (101) is fluidically and electrically conductively connected to the first end segment (102a) of the second branch (102), and **in that** the second end segment (102c) of the second branch (102) is fluidically and electrically conductively connected to the first end segment (103a) of the third branch (103).

8. The method according to one of Claims 4 to 6, **characterized in that** the branches (101, 102, 103) are not in fluid communication with one another and are designed to guide, separately from one another, a respective fluid (F, F', F") to be heated.

9. The method according to one of Claims 4 to 8, **characterized in that** the branches (101, 102, 103) are respectively designed as a loop, wherein the middle segment (101b, 102b, 103b) of the respective branch (101, 102, 103) forms one end of the respective loop (101, 102, 103).

10. The method according to one of Claims 4 to 9, **characterized in that** the branches (101, 102, 103) respectively extend along a longitudinal axis (A).

11. The method according to one of Claims 4 to 10, **characterized in that** the end segments (101a, 101c; 102a, 102c; 103a, 103c) of the branches (101, 102, 103) of the at least one pipeline (100) are arranged in a central region (B) from which the branches (102, 102, 103) extend outward along a radial direction (R).

12. The method according to Claim 10 or 11, **characterized in that** the longitudinal axes (A) of every two adjacent branches (101, 102; 102, 103; 103, 101) enclose an angle of 120°.

13. The method according to one of the preceding claims, **characterized in that** a plurality of pipelines (100) and in particular a plurality of voltage sources (2) is provided.

14. The method according to Claim 13, **characterized in that** a plurality or all of the pipelines (100) are fluidically connected to one another in series so that they can be flowed through in succession by the fluid (F).

15. The method according to one of the preceding claims, **characterized in that** a hydrocarbon to be thermally cracked is heated as a fluid.

16. The method according to one of Claims 1 to 14, **characterized in that** water or water vapor is heated as a fluid.

17. The method according to one of Claims 1 to 14, **characterized in that** combustion air of a reformer furnace is preheated as a fluid.

**Revendications**

1. Procédé de chauffage d'un fluide (F) en utilisant un dispositif de chauffage d'un fluide, comprenant :

   - au moins une conduite (100) électriquement conductrice pour la réception du fluide (F), et
   - au moins une source de tension (2) connectée à l'au moins une conduite (100), l'au moins une source de tension (2) étant conçue pour générer un courant électrique dans l'au moins une conduite (100), lequel réchauffe l'au moins une conduite (100) pour le chauffage du fluide (F),
   - l'au moins une source de tension (2) présentant au moins M conducteurs extérieurs (L1, ..., LM), M étant un nombre naturel supérieur ou égal à deux, et l'au moins une source de tension (2) étant conçue pour fournir une tension alternative aux conducteurs extérieurs (L1, ..., LM), lesdites tensions alternatives étant décalées de phase de 2 $\pi$/M les unes par rapport aux autres, et les conducteurs extérieurs (L1, ..., LM) étant connectés électriquement avec l'au moins une conduite (100) de telle façon à former une connexion en étoile, dans laquelle chaque conducteur extérieur (L1, ..., LM) est connecté de manière électriquement conductrice à travers au moins une partie de l'au moins une conduite (100) au point de neutre (S), et
   - le fluide s'écoulant à travers les une ou plusieurs conduites du dispositif et étant chauffé dans celles-ci, par le chauffage de l'au moins une ou des plusieurs conduites par un courant alternatif polyphasé circulant dans l'au moins une conduite ou dans les plusieurs conduites, de telle sorte qu'une chaleur provenant de l'effet Joule est générée dans l'au moins une conduite ou dans les plusieurs conduites, laquelle est transférée au fluide, de telle sorte que celui-ci est chauffé lors du passage à travers l'au moins une conduite ou les plusieurs conduites,

**caractérisé en ce que**

- un mélange de vapeurs d'hydrocarbures préchauffé est chauffé en tant que fluide, pour décomposer les hydrocarbures, ou
- l'au moins une conduite est conçue sous la forme d'un tube de réaction d'un réformateur.

**2.** Procédé selon la revendication 1, **caractérisé en ce que** l'au moins une source de tension (2) présente un conducteur neutre (N).

**3.** Procédé selon l'une quelconque des revendications précédentes, **caractérisé en ce que** M est égal à trois.

**4.** Procédé selon l'une quelconque des revendications précédentes, **caractérisé en ce que** l'au moins une conduite (100) présente M branches (101), chaque branche (101) présentant une première et une deuxième section d'extrémité (101a, 101c), ainsi qu'une section centrale (101b), qui connecte les deux sections d'extrémité (101a, 101c) l'une à l'autre de manière conductrice de fluide et électriquement conductrice.

**5.** Procédé selon la revendication 4, **caractérisé en ce que** les deux sections d'extrémité (101a, 101c, 102a, 102c, 103a, 103c) de la branche respective (101, 102, 103) sont connectées de manière électriquement conductrice au point de neutre (S).

**6.** Procédé selon l'une quelconque des revendications 4 à 5, **caractérisé en ce que** les sections centrales (101b, 102b, 103b) des branches (101, 102, 103) sont connectées respectivement de manière électriquement conductrice à un conducteur extérieur (L1, L2, L3) associé de l'au moins une source de tension (2).

**7.** Procédé selon la revendication 3 ou selon l'une quelconque des revendications 4 à 6 dans la mesure où elles se rapportent à la revendication 3, **caractérisé en ce que** la deuxième section d'extrémité (101c) de la première branche (101) est connectée de manière conductrice de fluide ainsi qu'électriquement conductrice à la première section d'extrémité (102a) de la deuxième branche (102) et **en ce que** la deuxième section d'extrémité (102c) de la deuxième branche (102) est connectée de manière conductrice de fluide ainsi qu'électriquement conductrice à la première section d'extrémité (102a) de la troisième branche (103).

**8.** Procédé selon l'une quelconque des revendications 4 à 6, **caractérisé en ce que** les branches (101, 102, 103) ne sont pas en communication de fluide entre elles et sont conçues pour être traversées, séparément les unes des autres, chacune par un fluide (F, F', F") à chauffer.

**9.** Procédé selon l'une quelconque des revendications 4 à 8, **caractérisé en ce que** les branches (101, 102, 103) sont conçues respectivement sous la forme d'une boucle, la section centrale (101b, 102b, 103b) de la branche (101, 102, 103) respective formant une extrémité de la boucle (101, 102, 103) respective.

**10.** Procédé selon l'une quelconque des revendications 4 à 9, **caractérisé en ce que** les branches (101, 102, 103) s'étendent respectivement le long d'un axe longitudinal (A).

**11.** Procédé selon l'une quelconque des revendications 4 à 10, **caractérisé en ce que** les sections d'extrémité (101a, 101c ; 102a, 102c ; 103a, 103c) des branches (101, 102, 103) de l'au moins une conduite (100) sont disposées dans une zone centrale (B) à partir de laquelle les branches (101, 102, 103) s'étendent dans une direction radiale (R) vers l'extérieur.

**12.** Procédé selon la revendication 10 ou 11, **caractérisé en ce que** les axes longitudinaux (A) de deux branches adjacentes (101, 102 ; 102, 103 ; 103, 101) forment un angle de 120°.

**13.** Procédé selon l'une quelconque des revendications précédentes, **caractérisé en ce qu'**une pluralité de conduites (100), et en particulier une pluralité de sources de tension (2), sont prévues.

**14.** Procédé selon la revendication 13, **caractérisé en ce que** plusieurs ou la totalité des conduites (100) sont en communication de fluide en série les unes avec les autres, de telle sorte qu'elles peuvent être traversées les unes après les autres par le fluide (F).

**15.** Procédé selon l'une quelconque des revendications précédentes, **caractérisé en ce qu'**un hydrocarbure à décomposer thermiquement est chauffé en tant que fluide.

**16.** Procédé selon l'une quelconque des revendications 1 à 14, **caractérisé en ce que** de l'eau ou de la vapeur d'eau est chauffée en tant que fluide.

**17.** Procédé selon l'une quelconque des revendications 1 à 14, **caractérisé en ce que** de l'air de combustion d'un four réformateur est chauffé en tant que fluide.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- DE 2362628 C3
- DE 710187 C